# EUROPEAN PATENT APPLICATION

(11) **EP 1 752 942 A1**
(43) Date of publication of application: **14.02.2007**
(21) Application number: 06253779.0
(22) Date of filing: 19.07.2006
(51) Int. Cl.: G07G 1/00, G07F 7/02

(54) **Purchase scanning system**

(30) Priority: 19.07.2005 GB 0514790
(71) Applicant: Cash Bases Limited, New Haven, East Sussex BN9 0LA (GB)
(72) Inventor: Byerley, Stephen, New Addington, Surrey CR0 0JA (GB)
(74) Representative: Leckey, David Herbert

(57) **Abstract**

A connector system comprising mobile units, in particular mobile shopping units, and a base station adapted to receive the mobile units. The mobile units each comprise a connector for establishing an electrical connection to other similar mobile units and for connecting to and holding a scanner. The mobile units are adapted to establish a connection to the base station, either directly through the connector or indirectly through a number of connectors provided on other mobile units.

## Description

The present invention is directed towards a purchase scanning system.

Shops and supermarkets now commonly provide customers with hand-held scanners, allowing the customer to scan the barcodes of products to be purchased. When entering the shop or supermarket, the customer picks up a scanner from one of an array of holders. The customer proceeds to scan all items to be purchased as these items are picked up from the shelves. Typically shopping trolleys have a holder for the scanner.

When leaving the shop or supermarket the customer returns the scanner to one of the array of holders from which the scanner was original taken. Subsequently a checkout summary is produced, allowing the customer to pay for the goods.

Each scanner has a re-chargeable battery which charges while the scanner is positioned in a holder, readying it for use by another customer.

Such known systems suffer from the disadvantage that a customer is forced to visit the same location in a shop or supermarket twice, namely a first time to pick up the scanner from a holder and a second time to return the scanner to a holder for re-charging.

If two arrays of holders are provided, one in the entrance to the shop or supermarket where a customer can conveniently pick up a hand-held scanner and another one in a check-out location, this problem is less severe. However, a system having two separate arrays of holders requires the hand-held scanners to be transferred from the array of holders in the check-out area to the array of holders in the entrance area and is thus labour intensive.

The present invention endeavours to overcome or at least mitigate these disadvantages.

According to an aspect of the present invention there is provided a purchase scanning system comprising a base station, a re-chargeable scanner and a mobile unit comprising a connector, wherein the connector is electrically connectable to the base station, whereby the scanner can be electrically connected to the base station for re-charging through the connector.

In the system of the present invention therefore a scanner does not need to be collected and returned to an array of holders as is the case with the prior art but may remain with a mobile unit before, during and after use of the scanner. Thus the users of the present system are not inconvenienced through having to visit the same array of holders twice during a shopping trip and furthermore no transfer of scanner units between holder arrays is required in the system of the present invention.

A preferred system may further comprise a receptacle for the scanner, electrically connected to the connector so that the scanner is electrically connected to the base station when the connector is connected to the base station and the scanner is in the receptacle. The scanner can be removed from the receptacle if necessary during shopping as in existing systems, so that items to be purchased can be scanned.

The receptacle preferably forms an integral part of the connector. Alternatively the receptacle may be positioned remotely from the connector.

The scanner receptacle preferably comprises a releasable lock for locking the scanner in the receptacle. The base station is preferably adapted to send a release signal to the scanner receptacle following customer identification. Alternatively or additionally, the connector may be adapted to generate a release signal upon customer identification.

The connector primarily supplies charging power to the scanner when the connector is connected to the base station and the scanner is connected to the connector. However, it may also provide other electric connections, e.g. data connections.

A preferred connector further comprises first and second connecting parts, so that a the first connecting part of a connector on one mobile unit can connect to a second connecting part of an identical second connector on another mobile unit, so as to connect the second connector electrically to the base station. Preferably one or both of the first and second connecting parts are rigid.

The mobile unit is preferably a shopping trolley or a shopping basket.

The base station preferably comprises a second connecting part complementary to the first connecting part, so that a first connecting part on a mobile unit can connect to the second connecting part of the base station.

A preferred base station comprises a display unit. This display unit is in one embodiment adapted to indicate on it if a connector is properly connected to the base station.

The base station preferably further comprises a card reader for reading a customer identification card, so that a customer can identify himself or herself to the system prior to use of a mobile unit/scanner combination. Alternatively or additionally, the mobile unit may comprise a card reader for reading a customer identification card, so that the customer does not need to go to the base station for customer identification.

The base station may further comprise a printer for printing a checkout summary and is preferably a mobile base station. The base station may furthermore comprise a loading bay for receiving a mobile unit. A mobile base station has the advantage that it can easily be collected from one location, for example from the car park of a shop or supermarket where customers have left their mobile shopping units after shopping, or from the exit area of a shop, and moved to another location where further mobile shopping units are required, such as in an entrance region of a shop or supermarket.

Alternatively, the base station may form part of a checkout desk at which the customer can pay for the selected goods, either in an automated system or with the help of a checkout assistant. In one preferred embodiment the mobile unit or connector comprises a releasable lock adapted to lock the mobile unit or connector selectively to another mobile unit or connector provided on another mobile unit. The base station is preferably adapted to send a release signal to the connector to release the another connector and so allow disconnection of the other mobile unit. Alternatively or additionally the connector or mobile unit may generate a release signal upon customer identification.

The present invention furthermore extends to a connector for use in a system according to the present invention and to a base station for use in a system according to the present invention.

According to another aspect of the present invention there is provided a connector unit connectable to a scanner and comprising a first connecting part and a second connecting part complementary to the first connecting part, wherein the connector unit has means for electrically connecting a scanner connected to the connector to one or both of the first connecting part and the second connecting part.

The scanner can preferably be removably received in a receptacle provided in the connector, so that the scanner is electrically connected to one or both of the first connecting part and the second connecting part when received in the receptacle.

Preferably the first connecting part and the second connecting part are electrically connected so that operating power, charging power and/or electrical data can be supplied or transmitted from the first connecting part to the second connecting part or vice versa. Preferably the connector comprises a card reader for reading a customer identification card. The connector is preferably mountable to a mobile unit.

A preferred embodiment of the present invention will now be described by way of example only and with reference to the accompanying drawings, in which:
Fig. 1 shows a system according to a preferred embodiment;
Fig. 2 shows a mobile shopping unit according to a preferred embodiment;
Fig. 3 shows a connector according to a preferred embodiment; and
Fig. 4 shows a mobile base station according to a preferred embodiment.

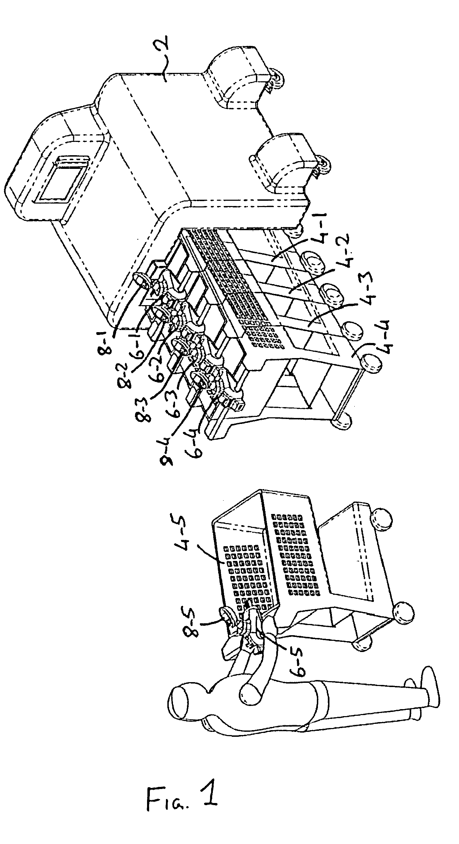

Fig. 1 shows a system in accordance with a preferred embodiment of the present invention. The illustrated system comprises a mobile base station 2 and a plurality of mobile shopping units in the form of shopping trolleys 4-1, 4-2, 4-3, 4-4 and 4-5. Each shopping trolley 4-1, 4-2, 4-3, 4-4 and 4-5 is equipped with an electrical connector 6-1, 6-2, 6-3, 6-4 and 6-5, each removably holding a scanner 8-1, 8-2, 8-3, 8-4 and 8-5

As can be seen from Fig. 1, a first shopping trolley 4-1 is located in a loading bay of the base station 2. The connector 6-1 of the first shopping trolley 4-1 establishes an electrical connection to the base station 2. A second shopping trolley 4-2 is received in the first shopping trolley 4-1 and the connector 6-2 of the second shopping trolley 4-2 establishes a direct electrical connection to the connector 6-1 of the first shopping trolley 4-1. The connector 6-2 of the second shopping trolley 4-2 is furthermore indirectly connected to the base station 2 through the connector 6-1 of the first shopping trolley 4-1. The connector 6-2 provided on the second shopping trolley 4-2 can thus electrically communicate with the base station 2 through the connector 6-1 provided on the first shopping trolley 4-1.

Further shopping trolleys 4-3, 4-4 and 4-5 are received or receivable through the backs of the shopping trolleys 4-2, 4-3 and 4-4 already connected to the base station 2. As explained with reference to the second shopping trolley 4-2, a connector 6-4 provided on a shopping trolley 4-4 at the end of the queue of shopping trolleys 4-1, 4-2, 4-3 and 4-4 is electrically connected to the base station 2 through intermediate connectors 4-3, 4-2 and 4-1.

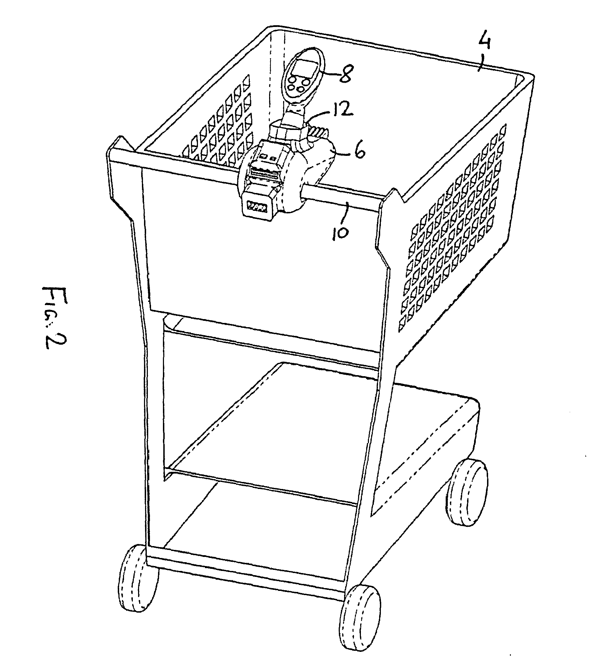

Fig. 2 shows a preferred shopping trolley 4 in more detail in the state in which it is used by a customer, that is when it is not connected to another shopping trolley 4-1, 4-2, 4-3, 4-4 or 4-5 or to the base station 2. As can be seen from Fig. 2, a connector 6 holding a scanner 8 is attached to a handle bar 10 of the shopping trolley 4. The scanner 8 is removably received in a receptacle 12 in the connector 6 and is electrically connected to the connector 6 when in the receptacle 12.

The scanner 8 provided on the shopping trolley 4 may be a conventional scanner (i.e. a data reading device) or may alternatively be a scanner designed specifically for use with a connector 6 provided on a shopping trolley 4. Normally such devices transmit purchasing data to a radio receiver connected to the shop's or supermarket's central computer system.

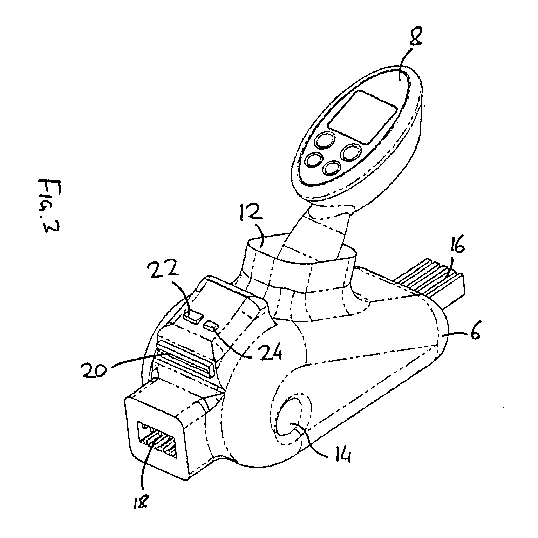

Fig. 3 shows the preferred connector 6 shown in Fig. 2 in more detail. The connector 6 has an opening 14 for mounting to the handle bar 10 of the shopping trolley 4 and a receptacle 12 for removably receiving the scanner 8. Further provided are a first, male connecting part 16 and a second, female connecting part 18. The cross-section of the first connecting part 16 is complementary to that of the second connecting part 18 so as to mate therewith. The first connecting part 16 accordingly fits into the second connecting part 18 of an identical connector 6 provided on a further shopping trolley 4 or on the base station 2.

Electrical contacts (not shown) are provided in the first connecting part 16, in the second connecting part 18 and in the receptacle 12. The contacts in the receptacle 12 are electrically connected to the contacts provided on the first connecting part 16 to enable electrical communication between the scanner 8 in the receptacle 12 and the first connecting part 16. The electrical contacts of the first connecting part 16 and the second connecting part 18 are arranged so that the contacts of a first connecting part 16 of one connector 6 can establish an electrical connection with the contacts of a second connecting part 18 of a similar connector 6 when the two connectors are connected to each other as is, for example, shown in Fig. 1.

Through this electrical connection charging power is supplied to the scanners 8-1, 8-2, 8-3 and 8-4 from the base station 2 while the connectors 6-1, 6-2, 6-3 and 6-4 are connected to the base station 2. The charging power provided by the base station may be AC or DC power. The electrical connection may further permit electrical data communication from scanners 8-1, 8-2, 8-3 and 8-4 to base station 2.

In one embodiment the electrical contacts of the first connecting part 16 are directly connected to the electrical contacts of the second connecting part 18 so that electrical communication through a connector 6 is possible independent of whether or not a scanner 8 is inserted in the receptacle 12 of the connector 6.

The preferred connector 6 further comprises a releasable lock (not shown) for locking the scanner 8 in the receptacle 12 so that the scanner 8 cannot be removed from the receptacle 12. The releasable lock releases the scanner 8 upon receipt of a release signal. This release signal can, for example, be received from the base station 2 through the first connecting part 16 or be generated by the connector 6 or the mobile unit itself, upon say a user swiping a card through a card reader 20 on the mobile unit or the base station 2.

The card reader 20 is may be provided on the preferred connector 6. This card reader 20 can read a customer identification card. A release signal causing the releasable lock to release the scanner 8 may be generated by the card reader 20 upon valid identification of the customer identification card, thus permitting use of the hand-held scanner.

The preferred connector 6 may further comprise a releasable connector lock for releasably locking a first connecting part 16 of one connector 6 to the second connecting part 18 of another connector 6. The releasable connector lock releases the connection when receiving a release signal. The release signal may be received from the base station 2 through the first connecting part 16, or may alternatively be received from a connector 6 or mobile unit upon user identification.

The first 16 and second 18 connecting parts may not be rigid connecting parts as is shown in Fig. 3 but rather form part of a flexible connector system provided on shopping trolley 4-1, 4-2, 4-3, 4-4 or 4-5 that is used for securing shopping trolleys to each other while not in use. For example, the first 16 and second 18 connector parts may comprise a flexible securing element, such as a length of chain, for securing shopping trolleys together. Alongside this flexible securing element the alternative embodiment provides a cable terminating in a plug or socket arrangement that can be electrically connected to the connector 6. This plug or socket permits an electrical connection to be established between the separate connectors 6-1, 6-2, 6-3, 6-4 and/or 6-5. The plug and socket arrangements may have the double function of mechanically and electrically connecting connectors 6-1, 6-2, 6-3, 6-4 and/or 6-5 or may alternatively only connect connectors 6-1, 6-2, 6-3, 6-4 and/or 6-5 electrically and be provided alongside additional mechanical connecting members.

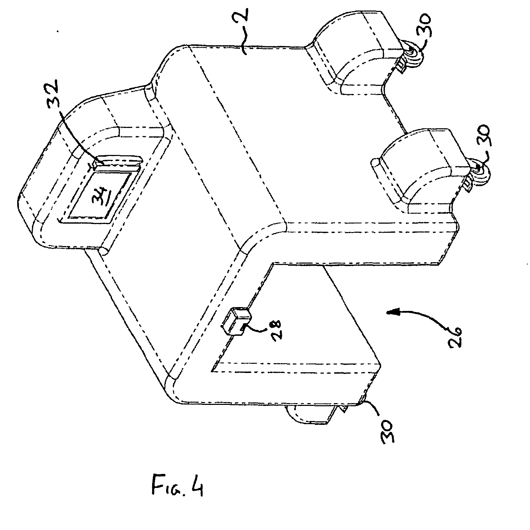

Fig. 4 shows a preferred base station 2 comprising a loading bay 26 for receiving shopping trolleys 4 and a connecting part 28 for connecting to the first connecting part 16 of a connector 6 provided on a shopping trolley 4. The preferred base station 2 shown in Fig. 4 is a mobile base station 2 and comprises wheels 30 to allow easy transport of the base station 2 to and from various locations in a shop or supermarket.

The connecting part 28 of base station 2 is substantially identical to the second connecting part 18 of the connector 6 of Fig. 3. This connecting part 28 can receive a first connecting part 16 of such a connector 6 and can establish an electrical connection between the base station 2 and a connector 6.

The preferred mobile base station 2 shown comprises a card reader 32 and a display unit 34 and may be connected to a central computer system of a shop or supermarket. The display unit 34 may display information to customers, such as directions for use of the system, or to indicate error states, such as may, for example, occur when a connection between adjacent connectors 6 has not been fully established, when a customer identification card has not been correctly read or if a customer is not entitled to use the system.

The operation of the preferred purchase scanning system will now be described in more detail.

When commencing a shopping trip, a customer approaches a shopping trolley 4 connected to a base station 2 as shown in Fig. 1. In the configuration shown in Fig. 1 the shopping trolleys 4-1, 4-2, 4-3 and 4-4 are locked to the base station 2 through the releasable connector locks provided in connectors 6-1, 6-2 and 6-3 and through a further releasable connector lock provided in connector 28 of base station 2. The scanners 8-1, 8-2, 8-3 and 8-4 provided on the shopping trolleys 4-1, 4-2, 4-3 and 4-4 are similarly locked to the respective connectors 6-1, 6-2, 6-3 and 6-4 so that in an initial locked state of the system neither a shopping trolley 4-1, 4-2, 4-3 and 4-4 nor a scanner 8-1, 8-2, 8-3 and 8-4 can be removed from the base station 2/shopping trolley 4 assembly.

In order to use one of the shopping trolleys 4-1, 4-2, 4-3 and 4-4 illustrated in Fig. 1, a customer inserts his or her customer identification card in the card reader 20 provided in the connector 6-4 of the last shopping trolley 4-4 in the row of shopping trolleys 4-1, 4-2, 4-3 and 4-4 or swipes the card through the card reader 32 provided on the base station 2, so that the customer identification card can be read by card readers 20 or 32 respectively. This allows identification of the customer to the system of the preferred embodiment.

After reading of the card, the base station 2 decides, based on the customer information acquired from the customer identification card, whether or not a customer is entitled to use one of the shopping trolleys 4-1, 4-2, 4-3 and 4-4 connected to the base station 2. If the customer is so entitled, the base station 2 assigns the scanner 8-4 provided on the last shopping trolley 4-4 in the row of shopping trolleys 4-1, 4-2, 4-3 and 4-4 to the customer so identified. As each of the scanners 8-1, 8-2, 8-3, 8-4 and 8-5 generally has a unique scanner identification code, the customer can be identified by detection of the scanner identification code when returning the shopping trolley 4-4 to the base station 2.

Subsequent to customer identification, the base station 2 or the connector 6-4 provided on the last shopping trolley 4-4 generates a release signal to cause the releasable lock to release the scanner 8-4 so that the customer can use the scanner 8-4 as a hand held scanner. A further release signal is generated to cause the release of shopping trolley 4-4 from the row of shopping trolleys 4-1, 4-2, 4-3 and 4-4.

After release of scanner 8-4 and shopping trolley 4-4 the customer can then proceed to select items from the shelves of the shop or supermarket, scanning in the bar code of each selected item using the scanner 8-4. The scanner 8-4 comprises a radio frequency transmitter (not shown) for transmitting the scanned product information to the mainframe of a shop or supermarket, where the product information is collected and stored until the customer finishes his or her shopping trip. Alternatively, a memory unit which records details of the scanned items may be provided in the scanner 8-4 for collecting and storing the product information in the scanner 8-4 until the scanner 8-4 is re-connected to the base station 2.

When all desired items are selected, the customer proceeds to one of one or more base stations 2 provided in the shop or supermarket, removes the items to be purchased from the shopping trolley 4-4 and re-inserts the shopping trolley 4-4 into the back of the last shopping trolley 4 in a row of shopping trolleys connected to the base station 2. By so re-inserting the shopping trolley 4-4 the connector 6-4 is re-connected to the connector 6 provided on an adjacent shopping trolley 4, thus establishing an electrical connection to the base station 2 through the connectors of the shopping trolleys 4 located between the newly inserted shopping trolley 4-4 and the base station 2. Once this electrical connection is established, the scannr 8-4 can be re-charged for use by the next customer.

Re-connection of the mobile unit to the base station may trigger locking of the unit and scanner and also initiate a check out procedure, e.g. an invoice production.

Following re-connection of the scanner 8-4 to the base station 2, the customer can pay for the purchased at a checkout desk.

It will be appreciated that the present invention has been described by way of example only and that various modification may be made to the preferred systems and system components described without departing from the scope of the present invention as defined by the claims. The receptacle 12 for receiving the scanner 8 may, for example, be provided as a component separate from a connector member comprising the first 16 and second 18 connecting members. The component comprising the receptacle 12 and the connector member may be mounted separately to the handle bar 10 of a shopping trolley while electrically connecting the scanner receptacle 12 to the first 16 and second 18 connecting members. Thus, the first 16 and second 18 connecting members may, for example, form part of a mechanical connector adapted to interlock shopping trolleys 4 arranged in a row when not in use. The scanner receptacle 12 is electrically connected to this modified mechanical connector.

It will further be appreciated that the invention has other applications than just shopping trolleys. It can equally be applied to shopping baskets or the like, for example.

## Claims

1. A purchase scanning system comprising a base station, a re-chargeable scanner and a mobile unit comprising a connector;
wherein said connector is electrically connectable to said base station, whereby said scanner can be electrically connected to said base station for re-charging through said connector.

2. A system as claimed in claim 1, further comprising a receptacle for the scanner, the receptacle being electrically connected to said connector.

3. A system as claimed in claim 2, wherein said receptacle is arranged for receiving and electrically connecting said scanner to said connector so that said scanner is electrically connected to said base station when said connector is connected to said base station and said scanner is in said receptacle.

4. A system as claimed in claim 2 or 3, wherein said receptacle forms an integral part of said connector.

5. A system as claimed claim 2, 3 or 4, wherein said receptacle comprises a releasable lock for locking said scanner in said receptacle.

6. A system as claimed in any preceding claim, wherein said connec,tor further provides a data connection from said scanner to a computer system associated with said base station, when said scanner is connected to said connector.

7. A system as claimed in any preceding claim, wherein said connector further comprises first and second connecting parts, so that a said first connecting part of a connector on one mobile unit can connect to a said second connecting part of an identical second connector on another mobile unit, so as to connect said second connector electrically to said base station.

8. A system as claimed in claim 7, wherein said base station comprises a second connecting part complementary to said first connecting part, so that a first connecting part on a mobile unit can connect to said second connecting part of said base station.

9. A system as claimed in any preceding claim, wherein said mobile unit is a shopping trolley or a shopping basket.

10. A system as claimed in any preceding claim, wherein said base station comprises a display unit.

11. A system as claimed in any preceding claim, wherein said base station comprises a card reader for reading a customer identification card.

12. A system as claimed in any preceding claim, wherein said connector or mobile unit comprises a card reader for reading a customer identification card.

13. A system as claimed in any preceding claim, wherein said base station comprises a printer for printing a checkout summary.

14. A system as claimed in any preceding claim, wherein said base station is mobile.

15. A system as claimed in any preceding claim, wherein said base station comprises a loading bay for receiving a mobile unit.

16. A system as claimed in any preceding claim, wherein said connector comprises a releasable lock adapted to lock said connector selectively to another connector provided on another mobile unit.

17. A connector for use in a system as claimed in any preceding claim.

18. A base station for use in a system as claimed in any of claims 1 to 16.

19. A connector unit connectable to a scanner and comprising a first connecting part and a second connecting part complementary to said first connecting part;
wherein said connector unit has means for electrically connecting a scanner connected to said connector to one or both of said first connecting part and said second connecting part.

20. A connector as claimed in claim 19, wherein said scanner can be removably received in a receptacle provided in said connector, so that said scanner is electrically connected to one or both of said first connecting part and said second connecting part when received in said receptacle.

21. A connector as claimed in claim 19 or 20, wherein said first connecting part and said second connecting part are electrically connected so that charging power can be supplied from said first connecting part to said second connecting part or vice versa.

22. A connector as claimed in any of claims 19, 20 or 21, further comprising a card reader for reading a customer identification card.

23. A connector as claimed in any of claims 19 to 22, wherein said connector is mountable to a mobile unit.
